Europäisches Patentamt

European Patent Office

Office européen des brevets

(11) Publication number: **0 555 921 A1**

## (12) EUROPEAN PATENT APPLICATION

(21) Application number: **93200327.0**

(51) Int. Cl.5: **B01D 53/10**, B01J 20/28

(22) Date of filing: **06.02.93**

(30) Priority: **10.02.92 BE 9200136**

(43) Date of publication of application:
**18.08.93 Bulletin 93/33**

(84) Designated Contracting States:
**DE DK ES FR GB IT LU NL PT SE**

(71) Applicant: **Vansant, Etienne**
**Manderleylaan 6**
**B-2980 Zoersel(BE)**
Applicant: **Wulbrecht, Hendrik**
**Doornroosjestraat 5**
**B-8770 Ingelmunster(BE)**
Applicant: **Vanhauwaert, Filip**
**Steenovenstraat 20**
**B-8520 Kuurne(BE)**

(72) Inventor: **Vansant, Etienne**
**Manderleylaan 6**
**B-2980 Zoersel(BE)**
Inventor: **Wulbrecht, Hendrik**
**Doornroosjestraat 5**
**B-8770 Ingelmunster(BE)**
Inventor: **Vanhauwaert, Filip**
**Steenovenstraat 20**
**B-8520 Kuurne(BE)**

(74) Representative: **Dopchie, Jean-Marc**
**KORTRIJKS OCTROOI- EN MERKENBUREAU -**
**K.O.B. Kennedypark 21c**
**B-8500 Kortrijk (BE)**

(54) **Products, methods and appliances for removing pollutants from a fluid.**

(57) Product for the adsorption of pollutants from a fluid, composed from porous solid materials in powdered or granular form, and of which all components are specifically determined on the basis of their good adsorption properties, possibly adjusted by special techniques, with respect to at least one of the pollutants to be removed, the components being, for example, aluminosilicates (such as zeolites, clay minerals,...) which may or may not be combined with other substances. Method for removing pollutants from a fluid, characterised in that a product according to the invention is directly injected into the flowing fluid. Appliance for removing pollutants from a fluid, provided with a dosing apparatus (3), tower reactor (4) and filter appliance (5), so that a fluid originating from a space (1) is allowed, after cleaning, to enter the environment via a discharge duct (2). Use of a flue gas filter (5) with velocity-reducing chamber, for filtering liquids.

FIG. 7

EP 0 555 921 A1

The invention relates to products for rapid and efficient removal of pollutants from a fluid, each of said products comprising a mixture of solid materials in powdered or granular form, while each component of the mixture and its proportion based on the overall mixture was chosen specifically as a function of one or more pollutants from the fluid to be treated - on the basis of specific adsorption - and ion exchange properties of that component, whereby it is particularly suitable for removing one particular, or several well-defined pollutants - while the quantity of each component of the mixture, based on the overall quantity of the mixture, is preferably defined in such a way that said ratio for each component is proportional to the ratio of the concentration of the pollutant or the pollutants for which the component is particularly suitable, based on the total concentration of pollutants in the fluid to be treated.

The invention further also relates to methods and appliances for bringing a product of this type into contact with the fluid, so as to remove the pollutants.

The main field of application of the abovementioned products, methods and appliances is in the field of environmental clean-up. In order to avoid, for example, an air stream or a water stream, which enters the environment, containing environmental pollutants, said pollutants first have to be removed from said air or water stream.

Another possible application consists in the removal of unwanted substances from process water in industrial activities, in order to make the process water recyclable.

A number of methods and associated devices and/or substances are known for removing pollutants from a fluid: a first category comprises the so-called biological treatment methods. A second known purification method for a fluid takes place by means of static filtering. The use of activated carbon for removing pollutants is also well known. All known methods, however, have the drawback that they are not sufficiently fast and efficient.

The object of the invention is to develop a product with which it is possible to remove the pollutants from a flowing fluid very rapidly, and to do this with unprecedented speed and efficiency.

The invention is based on adsorption phenomena on porous solid materials, whereby unwanted organic and inorganic substances can be removed rapidly and efficiently from a flowing fluid (such as air and water streams). This method provides an alternative or can be combined with known methods.

Depending on the type of the porous solid materials or adsorbents, they have the property of fixing neutral organic and inorganic compounds, via physical and/or chemical adsorption phenomena, on their external and internal surface. At the same time, due to their ion exchange properties, organic and inorganic complex ions can be immobilised in said adsorbents. A purposeful selection of the adsorbents having specific adsorption and exchange properties as a function of the pollutants to be removed has the result that both neutral and electrically charged compounds can be removed in a controlled way from air and water streams.

A product which is composed according to the principles specified above and which comprises one or more specifically chosen porous solid materials in powdered form or granular form, for removing pollutants from a fluid, the ratios of quantities of the various components of the mixture with regard to one another preferably being determined as a function of the ratios between the concentrations of the various pollutants in the fluid to be cleaned, forms a first object of the invention.

The adsorption behaviour of said porous materials or adsorbents is a consequence of optimum porosity and affinity effects. The porosity effects are a consequence of the dimensions of the channels and/or cavities which occur in said porous materials. It is possible, via thermal and/or acid treatment techniques, to change said porosity effects in a controlled manner. The affinity effects are primarily determined by the type of the adsorbents (chemical composition and ion exchange capacity). It is, however, similarly possible to change, via a combined ion exchange/dehydroxylation technique or by an acid treatment, said affinities in a controlled manner (hydrophilic/hydrophobic character or polarity of the adsorbents). Starting from existing porous solid materials it is possible to adapt, by the abovementioned treatment technique, the porosity and affinity properties in a controlled manner, in order to cause component-specific-adsorption effects and thus to remove well defined organic and inorganic pollutants from air and water streams in a very efficient manner.

In a product according to the invention it is then possible to use materials which have been chemically or thermally treated as described above.

Efficient removal of pollutants is achieved by producing an optimum mixture of adsorbents, as a function of the pollutants present and as a function of their concentration, so that both low- and high-molecular or polar and non-polar pollutants can be adsorbed from a fluid (liquid or gas). Each component of the mixture in this context is chosen in such a way that it is particularly suitable, because of its specific properties, for removing one or more pollutants from the fluid. The mixture is ultimately composed in such a way that for each pollutant to be removed there is a particularly suitable material, preferably in a ratio which

2

is proportional to the concentration of that pollutant to be removed in the fluid.

Another object of the invention is a method of bringing a powdered or granular product as specified above into contact with a flowing fluid, the adsorbents being directly injected into the fluid stream.

Yet another object of the invention is a method in which the fluid stream is guided through the adsorbents which, for example, are held between filter cloths or in adsorption columns.

An object of the present invention is also an appliance for implementing the first-mentioned method according to the invention, the product being directly injected into the fluid stream.

Said appliance comprises a mixing unit, where the powdered or granular product is directly injected into the fluid flowing past. The amount of powder injected here can be made dependent on the measurement of the concentration of pollutants to be removed in the fluid. Said appliance further comprises a tower reactor where the fluid, together with the product, enters a larger space, and intense mixing of the adsorbents and the fluid stream is effected over a verifiable adsorption time. From the tower reactor the fluid, together with the product which in the meantime has reacted with the pollutants present, is conveyed to the filtration unit where separation between fluid and product (with pollutants) is obtained.

An advantage of the product according to the invention consists in the fact that for each fluid to be cleaned, as a function of the pollutants present and of their concentration, an optimum mixture of adsorbents can be composed, so that for each pollutant at least one substance in a proportional ratio forms part of the mixture, which substance is best suitable, because of its specific properties, for removing that pollutant. In that it is possible to provide, as it were, a made to measure product for each fluid, a very high efficiency is obtained.

An advantage of the method in which the product is directly injected into the fluid stream, and therefore also an advantage of the appliance for implementing said method, consists in an optimum contact being effected between the powdered or granular product and the fluid.

A subsidiary advantage of said method is found in the adjustability of the amount of powder as a function of the concentration of pollutants. In that the necessary amount of powder can be determined at each moment (by measurements), and in that the quantity injected can be matched precisely to this requirement, the powder consumption is reduced to an absolute minimum, without diminishing the efficiency of the method.

In the following a description is given, with reference to examples, of how the product according to the invention can be composed and, similarly by way of example, the specific adsorption capacities are indicated, in the form of a table, of 5 zeolites with respect to 19 organic substances and of powdered beringite, untreated and treated elutrilite and of powdered activated carbon (PAC), with respect to said 19 organic substances.

In addition, some preferred methods are described for bringing the product according to the invention into contact with a flowing fluid, and a preferred embodiment is described of a device for the direct injection of the product into the fluid stream. Said examples, preferred methods and embodiment, however, do not limit the invention solely to these examples, but illustrate the general principle of the invention of which there are various examples or possible embodiments. In this description, reference is made to the accompanying figures in which:

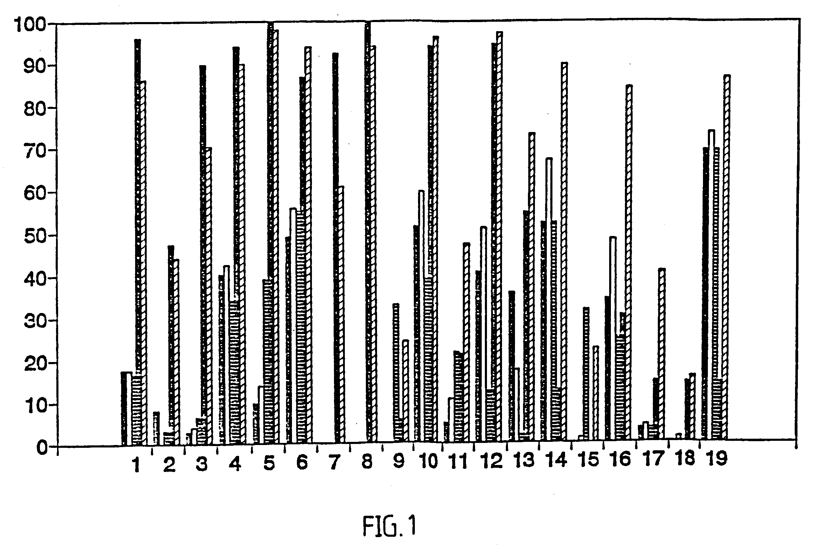

Figure 1, by means of a bar chart, depicts the adsorption capacities (in %) of 5 different zeolites with respect to 19 different organic substances. Said 19 substances are indicated on the horizontal axis by means of figures. Table 1 specifies which are the substances which are indicated by said respective figures.

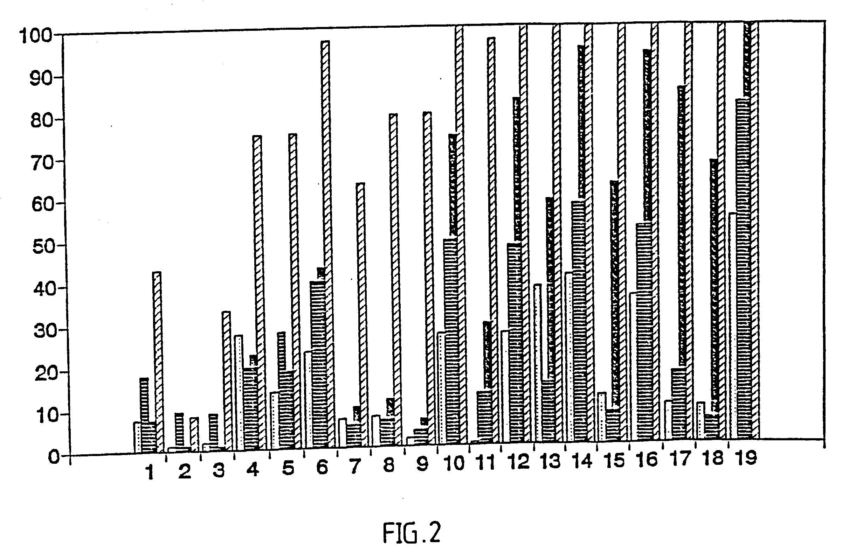

Figure 2 depicts, by means of a bar chart, the adsorption capacities (in %) of beringite, untreated and treated elutrilite and of powdered activated carbon (PAC) with respect to these same 19 organic substances.

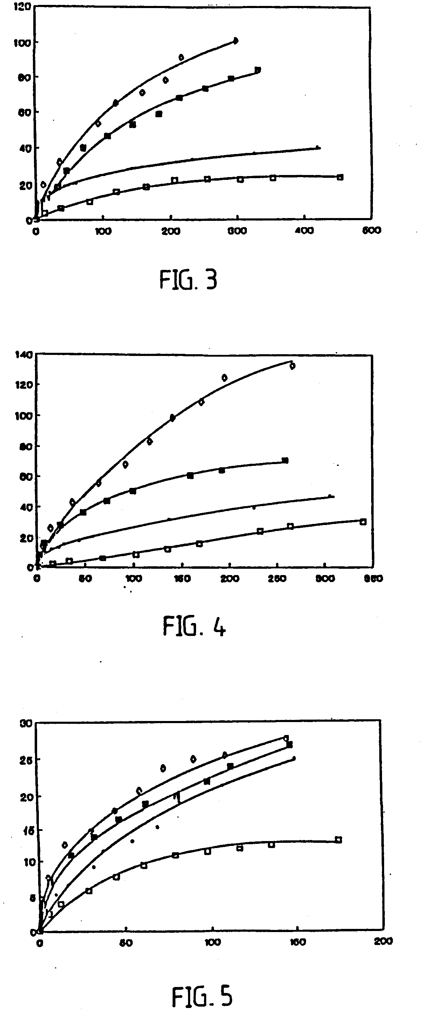

Figure 3 represents the adsorption isotherms (at room temperature) of untreated elutrilite and of treated elutrilites, respectively Zn elutrilite, Ca elutrilite and Na elutrilite, the adsorbed amount of pollutant - in this case benzene - being plotted in mg/g as a function of the concentration (in ppm) of the adsorbent - the product according to the invention - and the initial concentrations being 10-500 ppm and the ratio of the adsorbent with respect to the solution being equal to 0.2 g/100 ml.

Figure 4 represents the adsorption isotherms (at room temperature) of the same untreated and treated elutrilites and in the same manner as Figure 3, with respect to toluene, the initial concentrations being 10 to 400 ppm, the ratio adsorbent/solution for Na elutrilite and Ca elutrilite being equal to 0.2 g/100 ml, and the ratio adsorbent/solution for Zn elutrilite being equal to 0.1 g/100ml.

Figure 5 represents the adsorption isotherms at room temperature of the same untreated and treated elutrilites and in the same manner as in Figures 3 and 4, with respect to chloroform, the initial concentrations being between 10 and 200 ppm and the ratio adsorbent/solution being equal to 0.2 g/100 ml.

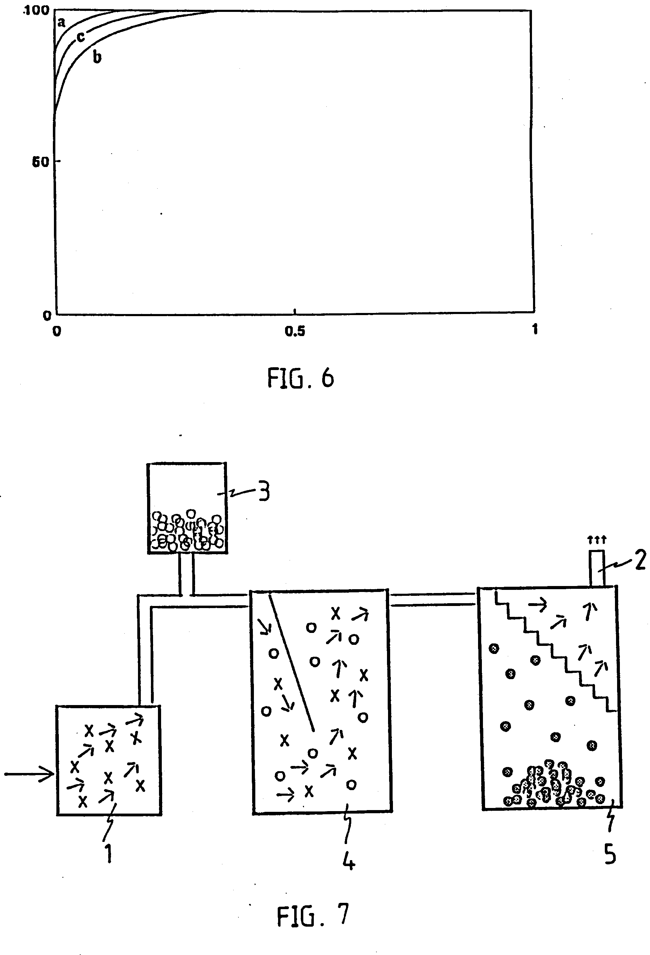

Figure 6 depicts the percentage ion exchange as a function of the following ratio of concentrations:

$$\frac{c_M^+}{c_M^+ \; + \; c_{Na}^+}$$

curve a depicting the ion exchange of $Na^+ - (CH_3)_4 \; N^+$ with respect to Na montmorillonite at room temperature (total ion concentration : 0.05N), curve b depicting the ion exchange of $Na^+ - NH_4^+$ with respect to Na montmorillonite (total ion concentration : 0.05N), and curve c depicting the ion exchange of $Na^+ - Cd^+$ with respect to Na montmorillonite at room temperature (total ion concentration : 0.05N).

Figure 7 depicts, in diagrammatic form, a preferred embodiment of an appliance according to the invention for the direct injection of the product according to the invention into the pollutant-containing fluid.

The basic adsorbents for the composition of the product according to the invention are aluminosilicates which may or may not be combined with other substances, such as, for example, carbon and inorganic salts.

In the case of the aluminosilicates, the zeolites (both natural and synthetic) and the clay minerals form the most important materials for adsorption purposes. The zeolites, which belong to the tectosilicates, represent types such as zeolites Y, mordenite A, silicalite X, ZSM-5, etc. Clay minerals which can act as adsorbents include substances such as montmorillonite, vermiculite, bentonite, chlinoptilolite and sepiolite, inter alia. Combinations of aluminosilicates and carbon, inorganic salts etc. may occur in untreated and treated elutrilite and beringite minerals.

The adsorbents which can be used for removing pollutants from air and water belong to the group as summarised in the following overview of adsorbents. Individual materials from the various groups (A,B,C,D,E) or mixtures of materials within a group or mixtures of materials belonging to different groups can be used as adsorbents.

Overview of adsorbents.

Group A.

Activated carbon; molecular sieve carbon, carbon substrates obtained via synthetic or natural routes, with or without pre- and/or post-treatment (chemical and/or thermal)

Group B.

Natural and/or synthetic clay minerals belonging to the phyllosilicates (1:1, 2:1, 2:1, 1); the tectosilicates (zeolites); synthetic zeolitic structures with Si or Al or Zr or other clathrate elements (SAPO, AlPO, zirconium phosphates etc.): both forms with or without structural mixing with materials from group A, C, D or E.

Group C.

Natural or synthetic alumina ($Al_2O_3$) including forms which are or are not partially hydrated (AlOOH, Al-(OH)$_3$) with chemical and/or thermal pre- and/or post-treatment and structurally mixed or not mixed with materials from group A, B, D or E; natural or synthetic alumina wherein, via isomorphous substitution, other chemical elements occur in the structure.

Group D.

Natural or synthetic silica ($SiO_2$) with or without chemical and/or thermal pre- and/or post-treatment and structurally mixed or not mixed with materials from group A, B, C or E; natural or synthetic silica, wherein, via isomorphous substitution, other chemical elements occur in the structure.

Group E.

Natural or synthetic metal oxides, sulphides, sulphates, phosphates and other water-insoluble salts.

In order to achieve efficient removal of pollutants in an air and water stream, an optimum mixture of adsorbents has to be prepared in the first place. Account has to be taken in this context of the specific properties of the various components. As an example, the adsorption properties of 5 different zeolites, namely NaX(13A), NaY, NaA(4A), silicalite, ZSM-5, and of powdered beringite, untreated and treated elutrilite and powdered activated carbon are given with respect to 19 different organic substances (see Table 1 and Table 2 hereinafter).

For Table 1 the following conditions apply: temperature 20° to 22°C, dosage: 0.2 g of adsorbent/40 ml of solution; equilibration time: 10 minutes, initial concentration: 50 ppm.

TABLE 1.

| No | Pollutant | Adsorption capacities ($^{mg}$/g) | | | | |
|---|---|---|---|---|---|---|
| | | NaX | NaY | NaA | Silicalite | ZSM-5 |
| 1 | Diethyl ether | 1.75 | 1.74 | 1.65 | 9.59 | 8.62 |
| 2 | 1-Propanol | 0.8 | 0 | 0.3 | 4.74 | 4.42 |
| 3 | 2-Butanone | 0.28 | 0.38 | 0.63 | 8.95 | 7.03 |
| 4 | Chloroform | 4.03 | 4.24 | 3.41 | 9.4 | 8.99 |
| 5 | Dichloroethane | 0.94 | 1.36 | 3.9 | 10 | 9.78 |
| 6 | Benzene | 4.89 | 5.57 | 5.5 | 8.66 | 9.38 |
| 7 | 3-Pentanol | 0 | 0 | 0 | 9.24 | 6.08 |
| 8 | Propylacetate | 0 | 0 | 0 | 10 | 9.41 |
| 9 | 3,3-dimethyl 2-butanol | 00 | 0 | 3.3 | 0.56 | 2.42 |
| 10 | Toluene | 5.13 | 5.96 | 3.91 | 9.4 | 9.63 |
| 11 | 2,2-Dimethyl-3-pentanone | 0.47 | 1.04 | 2.17 | 2.12 | 4.73 |
| 12 | Chlorobenzene | 4.06 | 5.09 | 1.23 | 9.45 | 9.73 |
| 13 | 1,1,2,2-Tetra-chloroethane | 3.57 | 1.72 | 0.18 | 5.46 | 7.33 |

| | | Adsorption capacities ($^{mg}$/g) | | | | |
|---|---|---|---|---|---|---|
| No | Pollutant | NaX | NaY | NaA | Sili-calite | ZSM-5 |
| 14 | 2-Chlorotoluene | 5.23 | 6.67 | 5.23 | 1.27 | 8.97 |
| 15 | 2-Dichlorophenol | 0 | 0.1 | 3.16 | 0 | 2.23 |
| 16 | 1,2-Dichloro-benzene | 3.44 | 4.83 | 2.51 | 3.04 | 8.43 |
| 17 | 2-Chlorobenz-aldehyde | 0.32 | 0.4 | 0.32 | 1.46 | 4.07 |
| 18 | 2,6-Dimethyl-aniline | 0 | 0.1 | 0 | 1.43 | 1.58 |
| 19 | 1,2,4-Tri-chlorobenzene | 6.95 | 7.38 | 6.95 | 1.46 | 8.67 |

For Table 2 the following conditions apply: temperature 24° to 26°C, dosage: 0.5 g of adsorbent/100 ml of solution; equilibration time: 4 hours, initial concentration: 50 ppm.

## TABLE 2.

| | | Adsorption capacities ($^{mg}$/g) | | | |
|---|---|---|---|---|---|
| No | Pollutant | Powder-ed berin-gite | Elutri-lite | Treated elutri-lite | P.A.C |
| 1 | Diethyl ether | 0.74 | 1.8 | 1.7 | 4.29 |
| 2 | 1-Propanol | 0.12 | 0.95 | 0.12 | 0.82 |

7

| No | Pollutant | Adsorption capacities ($^{mg}$/g) | | | |
|---|---|---|---|---|---|
| | | Powder-ed beringite | Elutri-lite | Treated elutri-lite | P.A.C |
| 3 | 2-Butanone | 0.18 | 0.9 | 0.08 | 3.31 |
| 4 | Chloroform | 2.73 | 1.96 | 2.27 | 7.46 |
| 5 | Dichloroethane | 1.38 | 2.78 | 1.88 | 7.5 |
| 6 | Benzene | 2.32 | 3.97 | 4.29 | 9.66 |
| 7 | 3-Pentanol | 0.69 | 0.55 | 0.96 | 6.27 |
| 8 | Propyl acetate | 0.74 | 0.65 | 1.15 | 7.91 |
| 9 | 3,3-dimethyl 2-butanol | 0.18 | 0.39 | 0.64 | 7.93 |
| 10 | Toluene | 2.67 | 4.89 | 7.38 | 10 |
| 11 | 2,2-Dimethyl-3-pentanone | 0.06 | 1.25 | 2.89 | 9.67 |
| 12 | Chlorobenzene | 2.55 | 4.74 | 8.24 | 10 |
| 13 | 1,1,2,2-Tetra-chloroethane | 3.76 | 1.47 | 5.84 | 10 |
| 14 | 2-Chlorotoluene | 4.03 | 5.73 | 9.47 | 10 |
| 15 | 2-Dichlorophenol | 1.16 | 0.77 | 6.27 | 10 |
| 16 | 1,2-Dichloro-benzene | 3.53 | 5.19 | 9.34 | 10 |
| 17 | 2-Chlorobenz-aldehyde | 0.94 | 1.7 | 8.46 | 10 |
| 18 | 2,6-Dimethyl-aniline | 0.89 | 0.58 | 6.71 | 10 |
| 19 | 1,2,4-Tri-chlorobenzene | 5.4 | 8.13 | 10 | 10 |

The data from Table 1 and Table 2 are represented in Figure 1 and Figure 2, respectively, by means of a bar chart, those numbers being placed on the horizontal axes in Figure 1 and 2 which in Tables 1 and 2 were assigned to the 19 different organic substances.

Said figures 1 and 2, by means of vertical bars, further indicate in percent (vertical axis), what is the adsorption capacity of the abovementioned adsorbents with respect to each of the 19 organic substances.

To this end, a number of vertical bars is presented at the level of each of the 19 figures on the horizontal axis. Said bars each represent one of the adsorbents which are presented in that figure, the height indicating (on the vertical axis from 0% to 100%) what is the adsorption capacity of that particular substance.

In Figure 1, NaX (13A) is indicated by means of a black bar to the extreme left, NaY is indicated by means of a completely white bar which is positioned to the right of and against the first mentioned black bar, NaA (4A) is indicated by means of a horizontally hatched bar, which is positioned to the right of and against the white bar, silicalite is indicated by means of a black bar which is positioned to the right of and against the horizontally hatched bar: ZSM-5 (powder) is indicated by means of an obliquely hatched bar which is positioned to the right of and against the black bar which indicates silicalite. These bars always occur in the same sequential order from left to right. If, for a particular component number, one or more bars do not occur, the place intended for this bar (or these bars) is left vacant and the sequential order of the other bars is maintained.

According to this same principle, Figure 2, from left to right, represents beringite by a bar filled with dots, elutrilite by a bar with horizontal hatching, Zn elutrilite by a predominantly black bar, and powdered activated carbon by a bar with oblique hatching.

The optimum mixture according to the invention is then composed on the basis of these data and on the basis of the type and concentration of the pollutants contained in the air or water stream to be cleaned. For each pollutant, that adsorbent is then determined which has the best adsorption capacities. These different adsorbents are then combined in such a ratio that the ratio of each adsorbent is proportional to the concentration of the pollutant for which it has optimum adsorption properties; if one adsorbent has optimum adsorption properties for two or more pollutants, the same adsorbent is used for said pollutants.

It is possible to modify, via thermal and/or acid treatment techniques, the porosity effects of said adsorbents in a controlled manner, which then also affects the adsorption behaviour of said adsorbents.

It is likewise possible, via a combined ion exchange/dehydroxylation technique or by means of an acid treatment, to affect the affinity effects of said adsorbents in a controlled manner (hydrophilic or hydrophobic character or polarity of the adsorbents). The affinity effects also contribute in determining the adsorption behaviour.

For the purpose of illustration, Figures 3, 4 and 5 indicate, by means of adsorption isotherms, the impact of the porosity effect modification in elutrilite on the adsorption capacity with respect to benzene, toluene and chloroform, respectively. The curves indicated with white squares depict the results (adsorption capacities in mg/g) with untreated elutrilite for various equilibrium concentrations (in ppm).

The curves indicated with dots give the results with Zn elutrilite. The black filled squares give the results with Ca elutrilite. The curves indicated by diamonds depict the results with Na elutrilite.

In each of the Figures 3, 4 and 5 it can be clearly seen that treating adsorbents as described above has a positive impact on the adsorption capacities.

Figure 6 indicates how the ion exchange properties of adsorbents can be affected.

The appliance for direct injection into the fluid stream of the powdered product according to the invention is diagrammatically presented in Figure 7 for a preferred embodiment. The fluid with pollutants is situated in the space (1). The intention is to arrange for the fluid to enter the environment via a discharge line (2). The appliance according to the invention has a dosing apparatus (3) for injecting the powdered product according to the invention into the line through which the contaminated fluid flows on route to the discharge line (2). This dosing apparatus (3) has a measuring part and a dosing part. The measuring part continuously measures the quantity of pollutant(s) contained in the fluid flowing past, and sends this information to the dosing part. On the basis of this measurement and of the fluid output, the required amount of powdered product is automatically determined and regulated (with the dosing part), so as to inject the correct quantity of product into the fluid.

The fluid with the entrained product is then passed into a so-called tower reactor (4). The shape of such tower reactors is based on the principle of section increase, by which a sudden velocity reduction of the flowing fluid is obtained. To this end, an appliance can be used which corresponds to the characteristics of the appliance according to Belgian Patent No. 8901086, the filter cloth, however, being omitted. In the tower reactor (4), intense mixing of adsorbents and fluid is achieved over a verifiable period. The fluid with the product entrained thereby is then passed to a filter (5). In this filter (5) the product according to the invention is separated from the cleaned fluid. The filter (5) is a known filter appliance for separating solid materials from a gaseous product or from a liquid product.

A filter according to the principle of Belgian Patent No. 8901086 can be used in the appliance according to the invention. Although this patent only describes the use for filtering gases, a filter based on the same principle can be designed for filtering liquid products. The characteristics of the filter according to BE-8901086 remain the same in that case. The present invention merely relates to a novel field of application for the abovementioned filter. The novel use of said filter disclosed by the abovementioned patent at the same time forms another object of this invention.

Other known methods and associated appliances for filtering can likewise be used with this product according to the invention. Thus the product can be disposed on or between a filter cloth, through which the fluid stream is then directed, or adsorption columns can be used.

In summary, it is possible to effect, using the abovementioned products, methods and appliances and in a very rapid and efficient manner, the removal, from fluid streams, of organic pollutants such as :

- saturated hydrocarbons (aliphatic hydrocarbons) together with their derivatives.
- aromatic compounds and their derivatives.
- heterocyclic compounds and their derivatives.

This group of products includes:

- chlorinated and fluorinated hydrocarbons
- ammonia and organic amines
- organic sulphur compounds
- organic solvents (acetone, ethers, alcohols, etc.).

and of inorganic pollutants such as:

$SO_2$, $NO_x$, $H_2S$, mercaptans, $CO_2$, CO, $H_2O$, Hg vapours, $CS_2$, etc.

The novel products, methods and appliances according to the invention have important applications in the environment-polluting industry, where efficient removal of pollutants from the gases and/or the waste water entering the environment is increasingly becoming one of the most important problems.

Since current methods are often insufficiently efficient and, as a result, allow too much pollution to enter the environment, the present invention makes an important step forward in the field of environmental clean-up.

## Claims

1. Product for the adsorption of pollutants from a fluid, composed from one or more powdered or granular porous solid materials having specific adsorption properties, with respect to at least one pollutant occurring in the fluid, characterised in that for each pollutant which must be removed from the fluid at least one substance having specific adsorption properties with respect to that pollutant is present in the product, in a ratio which is proportional to the ratio in which that pollutant occurs in the fluid to be cleaned.

2. Product for the adsorption of pollutants from a fluid, according to Claim 1, characterised in that the adsorption behaviour of at least one of the materials is adapted in controlled manners (sic) by applying one or more treatment techniques by which changes of the porosity effects and/or affinity effects of said material are obtained, so that specific adsorption effects are caused with respect to at least one of the pollutants to be removed from the fluid.

3. Product for the adsorption of pollutants from a fluid, according to Claim 2, characterised in that the porosity effects are modified by thermal, chemical and/or acid treatment techniques.

4. Product for the adsorption of pollutants from a fluid, according to Claim 2, characterised in that the affinity effects are modified by a combined ion exchange/dehydroxylation technique or by an acid treatment.

5. Product for the adsorption of pollutants from a fluid, according to one or more of the preceding claims, characterised in that at least one component of the product is an aluminosilicate, combined or not combined with other materials.

6. Product for the adsorption of pollutants from a fluid, according to Claim 5, characterised in that aluminosilicates are combined with carbon and/or inorganic salts.

7. Product for the adsorption of pollutants from a fluid, according to Claims 5 or 6, characterised in that, for obtaining combinations of aluminosilicates with carbon and/or inorganic salts, untreated and treated elutrilite and beringite minerals are used.

8. Product for the adsorption of pollutants from a fluid, according to one of more of the preceding claims, characterised in that at least one component of the product is a zeolite.

9. Product for the adsorption of pollutants from a fluid, according to one of more of the preceding claims, characterised in that at least one component of the product is a clay mineral.

10. Product for the adsorption of pollutants from a fluid, according to one of more of the preceding claims, characterised in that at least one component belongs to the following types of products: zeolites Y, mordenite A, silicalite, silicalite X, ZSM-5, NaX (13A), NaY, NaA (4A).

11. Product for the adsorption of pollutants from a fluid, according to one of more of the preceding claims, characterised in that at least one component belongs to the following materials : montmorillonite, vermiculite, bentonite, chlinoptilolite and sepiolite.

12. Product for the adsorption of pollutants from a fluid, according to one of more of the preceding claims, characterised in that at least one component belongs to the following materials : powdered beringite, untreated elutrilite, treated elutrilite, powdered activated carbon.

13. Product for the adsorption of pollutants from a fluid, according to one or more of the preceding claims, characterised in that the product is composed from materials belonging to the groups A,B,C,D,E following hereinafter, these being individual materials from the diverse groups or mixtures of substances within a group or mixtures of substances belonging to various groups:
Group A.
Activated carbon; molecular sieve carbon, carbon substrates obtained via synthetic or natural routes, with or without pre- and/or post-treatment (chemical and/or thermal)
Group B.
Natural and/or synthetic clay minerals belonging to the phyllosilicates (1:1, 2:1, 2:1, 1); the tectosilicates (zeolites); synthetic zeolitic structures with Si or Al or Zr or other cloth rate elements (SAPO, AlPO, zirconium phosphates etc.): both forms with or without structural mixing with materials from group A, C, D or E.
Group C.
Natural or synthetic alumina ($Al_2O_3$) including forms which are or are not partially hydrated (AlOOH, Al-$(OH)_3$) with chemical and/or thermal pre- and/or post-treatment and structurally mixed or not mixed with materials from group A, B, D or E; natural or synthetic alumina wherein, via isomorphous substitution, other chemical elements occur in the structure.
Group D.
Natural or synthetic silica ($SiO_2$) with or without chemical and/or thermal pre- and/or post-treatment and structurally mixed or not mixed with materials from group A, B, C or E; natural or synthetic silica, wherein, via isomorphous substitution, other chemical elements occur in the structure.
Group E.
Natural or synthetic metal oxides, sulphides, sulphates, phosphates and other water-insoluble salts.

14. Method for removing pollutants from a fluid, characterised in that a product according to one or more of Claims 1 to 13 inclusive is injected directly into the flowing fluid.

15. Method according to Claim 14, characterised in that the amount of injected powder is made to be controllable, and in that that amount will be changed as a function of the concentration of the pollutants to be removed in the fluid, in such a way that at each moment a quantity of product is injected which precisely satisfies the requirement at that moment, in that means (4) are provided for effecting intense mixing of product and fluid, and in that finally the product with adsorbed pollutants will be separated from the cleaned fluid in a filter appliance (5).

16. Method according to Claim 15, characterised in that the product is held in adsorption columns and in that the fluid is made to flow through said columns.

17. Appliance for removing pollutants from a fluid, characterised in that said appliance comprises a dosing apparatus (3), positioned in such a way on a line, through which the fluid flows, that the product can be injected into the flowing fluid in an amount which is or is not adjustable, in that said appliance further comprises a larger space (4) connected downstream to the line, in that said space (4) is provided with means for effecting intense mixing between fluid and product over a verifiable period, and in that said appliance further comprises a filter appliance (5) for separating the product from the fluid.

18. Appliance for removing pollutants from a fluid, according to Claim 17, characterised in that the dozing apparatus (3) has a measuring part and a dozing part, in that the measuring part is positioned and provided for continuously measuring the concentration of the pollutants in the fluid upstream of the dozing part, and the information concerning this measurement is transmitted to the dozing part, and in that the dozing part controls the necessary amount of product according to the method according to Claim 15.

19. Appliance for removing pollutants from a fluid, according to Claim 17 or 18, characterised in that the large space (4) is constructed as a velocity-reducing chamber, comprising an enclosed space, in which an intermediate wall divides said space from the top into a space having a small flow cross section and a space having a large flow cross section, over the entire width thereof, but not over the entire height, so that the small and the large space below communicate with each other and form a cross section increase for the fluid which, entering at the top of the small space, has to describe a curve via the cross section increase in order to reach the outlet at the top of the large space.

20. Appliance for removing pollutants from a fluid, according to one or more of Claims 21 (sic), 18 and 19, characterised in that the filter appliance (5) has the characteristics of a filter with a velocity-reducing chamber, comprising an enclosed space, in which an intermediate wall divides said space from the top into a space having a small flow cross section and a space having a large flow cross section, over the entire width thereof, but not over the entire height, so that the small and the large space below communicate with each other and form a cross section increase for the fluid which, entering at the top of the small space, has to describe a curve via the cross section increase in order to reach the filter cloth and thereafter the outlet into the large space.

21. Use of a flue gas filter (5) having a velocity-reducing chamber as described in Claim 20, characterised in that it is used for filtering liquids.

FIG.1

FIG.2

EP 0 555 921 A1

FIG. 3

FIG. 4

FIG. 5

FIG. 6

FIG. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4 770 784 (J.C. DAVIS ET AL.)) <br><br> * column 4, line 1 - line 17 * <br> * column 5, line 4 - line 15 * <br> * column 5, line 47 - line 65 * <br> * column 6, line 39 - line 48 * <br> * column 4, line 40 - line 68 * <br> --- | 1,2,13, 15,16 | B01D53/10 <br> B01J20/28 |
| X | EP-A-0 441 111 (EKA NOBEL) <br><br> * column 1, line 23 - line 29 * <br> * column 2, line 43 - line 47 * <br> * column 6, line 50 - line 58 * <br> * column 7, line 1 - line 26 * <br> --- | 1,13,15, 17 | |
| X | EP-A-0 172 588 (METALLGESELLSCHAFT) <br> * page 4, paragraph 3 * <br> --- | 1 | |
| A | DE-A-4 014 388 (HITACHI ZOSEN) <br> * page 3, line 15 - line 30 * <br> --- | 1 | |
| A | WO-A-8 909 183 (NATEL MINES) <br> * page 21 - page 22; claim 11 * <br> --- | 1,17,18 | TECHNICAL FIELDS SEARCHED (Int. Cl.5 ) <br><br> B01D <br> B01J |
| A | US-A-4 912 070 (YASUMASA MITANI) <br><br> * column 1, line 7 - line 63 * <br> --- | 1-5,8,9, 13 | |
| A | WO-A-9 106 506 (FUEL TECH) <br> * page 32; claim 1 * <br> * page 10, paragraph 2 * <br> --- | 1,15,17 | |
| A | DE-A-2 546 307 (MIKROPUL) <br> * page 1; claim 1 * <br> * page 3, paragraph 3 * <br> * page 4, paragraph 1 -paragraph 2 * <br><br> ----- | 1 | |

The present search report has been drawn up for all claims

| Place of search | Date of completion of the search | Examiner |
|---|---|---|
| THE HAGUE | 18 MAY 1993 | BOGAERTS M.L.M. |

EPO FORM 1503 03.82 (P0401)